# EUROPEAN PATENT SPECIFICATION

(11) **EP 3 885 538 B1**
(45) Date of publication and mention of the grant of the patent: **26.07.2023**
(21) Application number: 21160517.5
(22) Date of filing: 03.03.2021
(51) Int. Cl.: F01D 21/04, F02C 7/277

(54) **AIR TURBINE STARTER FOR STARTING AN ENGINE AND METHOD OF FORMING A CONTAINMENT STRUCTURE FOR AN AIR TURBINE STARTER**
LUFTTURBINENANLASSER ZUM ANLASSEN EINES TRIEBWERKS UND VERFAHREN ZUR HERSTELLUNG EINER AUFFANGSTRUKTUR FÜR EINEN LUFTTURBINENANLASSER
DÉMARREUR À TURBINE À AIR POUR DÉMARRER UN MOTEUR ET PROCÉDÉ DE FABRICATION D'UNE STRUCTURE DE CONFINEMENT POUR UN DÉMARREUR À TURBINE À AIR

(30) Priority: 26.03.2020 IN 202011013207
(43) Date of publication of application: 29.09.2021
(73) Proprietor: Unison Industries LLC, Jacksonville, FL 32256 (US)
(72) Inventor: ASDEV, Jasraj, Jacksonville, Florida 32256 (US); NAYAK, Subrata, Jacksonville, Florida 32256 (US); DRANSCHAK, David, Jacksonville, Florida 32256 (US); MEYERS, Shiloh, Jacksonville, Florida 32256 (US); PATIL, Sharad, Jacksonville, Florida 32256 (US); RODRIGUEZ, Eliel, Jacksonville, Florida 32256 (US)
(74) Representative: Openshaw & Co.

(56) References cited:
- EP-A1- 3 090 148
- EP-A1- 3 263 848
- WO-A1-2015/094421

## Description

### TECHNICAL FIELD

The disclosure generally relates to an air turbine starter comprising a containment system, specifically for a containment system surrounding a turbine rotor in an air turbine starter.

The present invention relates to an air turbine starter for starting an engine and to a method of forming a containment structure for an air turbine starter.

### BACKGROUND

An aircraft engine, for example a gas turbine engine, is engaged in regular operation to an air turbine starter. The air turbine starter (ATS) can be used to initiate the rotation of the combustion engine. The ATS is often mounted near the engine and can be coupled to a high-pressure fluid source, such as compressed air, which impinges upon a turbine rotor in the ATS causing it to rotate at a relatively high rate of speed. The ATS includes an output shaft that is coupled to the turbine rotor, typically through a reducing gear box, to the engine. The output shaft thus rotates with the turbine wheel. This rotation in turn causes a rotatable element of the combustion engine (e.g. the crankshaft or the rotatable shaft) to begin rotating. The rotation by the ATS continues until the combustion engine attains a self-sustaining operating rotational speed. EP 3 263 848 A1 discloses a deformable turbine bearing mount for an air turbine starter that comprises a housing and a containment structure. WO 2015 094421 A1 discloses a gas turbine engine having an energy dissipating gap and a containment layer.

### BRIEF DESCRIPTION

An invention is set out in the claims. Aspects and advantages will be set forth in part in the following description, or may be obvious from the description, or may be learned through practice..

In one aspect, the present disclosure relates to an air turbine starter for starting an engine according to claim 1.

In another aspect the present disclosure relates to a method of forming a containment structure for an air turbine starter according to claim 10.

These and other features, aspects and advantages will become better understood with reference to the following description and appended claims. The accompanying drawings, which are incorporated in and constitute a part of this specification, illustrate embodiments and arrangements described herein and, together with the description, serve to explain the principles of those embodiments and arrangements.

### BRIEF DESCRIPTION OF THE DRAWINGS

A full and enabling disclosure of the present invention, including the best mode thereof, directed to one of ordinary skill in the art, is set forth in the specification, which makes reference to the appended figures:
FIG. 1 is a perspective view of a turbine engine with an accessory gearbox and an air turbine starter in accordance with various aspects described herein.
FIG. 2 is cross-sectional view of an exemplary air turbine starter that can be included in FIG. 1.
FIG. 3 is an enlarged cross-sectional view of a portion of the air turbine starter of FIG. 2 including a containment system.
FIG. 4A is a schematic cross-sectional view of a containment band of the containment system of FIG. 3 according to an aspect of the disclosure described herein.
FIG. 4B is a schematic cross-sectional view of a containment band of the containment system of FIG. 3 according to another aspect of the disclosure described herein.
FIG. 5 is a schematic cross-sectional view of a containment band of the containment system of FIG. 3 according to another aspect of the disclosure described herein.
FIG. 6 is a schematic cross-sectional view of a containment band of the containment system of FIG. 3 according to yet another aspect of the disclosure described herein, which does not correspond to the claims and is not a part of the invention.

### DETAILED DESCRIPTION

Aspects of the present disclosure are directed to a turbine engine with an air turbine starter that includes a containment structure for retaining, containing, or otherwise reducing the expulsion of ATS components. While the examples described herein are directed to application of a turbine engine and a starter, the disclosure can be applied to any implementation of a driving mechanism that generates rotational motion at a driving output and provides the rotational motion to another piece of rotating equipment. For purposes of illustration, the present disclosure will be described with respect to a starter for an aircraft turbine engine, however, the starter can have various applications including starting a gas turbine engine.

The containment structure as described herein surrounds the turbine rotor and is configured to both contain components of the turbine as well as absorb energy dissipated. Typically, metals having high toughness properties are used to form a containment band.

A conventional air-turbine starter (ATS) includes a turbine rotor that rotates under pressurized air to transmit enough speed and torque to start a turbine engine. A metal containment shield can be mounted within the ATS to provide strength and rigidity that retains, contains, prevents, or otherwise reduces the expulsion of ATS components, including, but not limited to, turbine rotors, loose components or fragments, additional rotary components, or the like. The metal containment shield contributes significantly to weight and has limited deformation capabilities for absorbing impacts, kinetic energy, or the like. Containment systems typically include a solid metal containment band surrounding the turbine rotor that is formed of a metal having high toughness such as 17-4PH steel or INCO series metal. A higher toughness of the material results in a thinner containment band. Toughness is defined as the ability of a material to absorb energy and the plasticity to deform without fracturing. Toughness requires a balance of strength and ductility. Metals having a high toughness also have a high density which contributes to the overall weight of the containment system and the aircraft.

A drawback of high toughness metals is that these materials also have a high density, making the containment band heavy and significantly add to the weight of the overall system and thus, the aircraft. In addition, the toughness of these metal materials can only limitedly be improved by special treatments which in turn limits the energy absorption capabilities and the thickness of the containment band.

An alternative approach is to integrate materials having a lower density, but higher toughness to form at least a portion of the containment band in order to increase the overall toughness, striking a balance between strength and ductility of the containment band, which can decrease the weight of the containment band while preserving or improving the specific energy absorption capability of the containment system.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

Additionally, as used herein, the terms "radial" or "radially" refer to a direction away from a common center. For example, in the overall context of a turbine engine, radial refers to a direction along a ray extending between a center longitudinal axis of the engine and an outer engine circumference. Furthermore, as used herein, the term "set" or a "set" of elements can be any number of elements, including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are used only for identification purposes to aid the reader's understanding of the present disclosure, and should not be construed as limiting on an embodiment, particularly as to the position, orientation, or use of aspects of the disclosure described herein. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

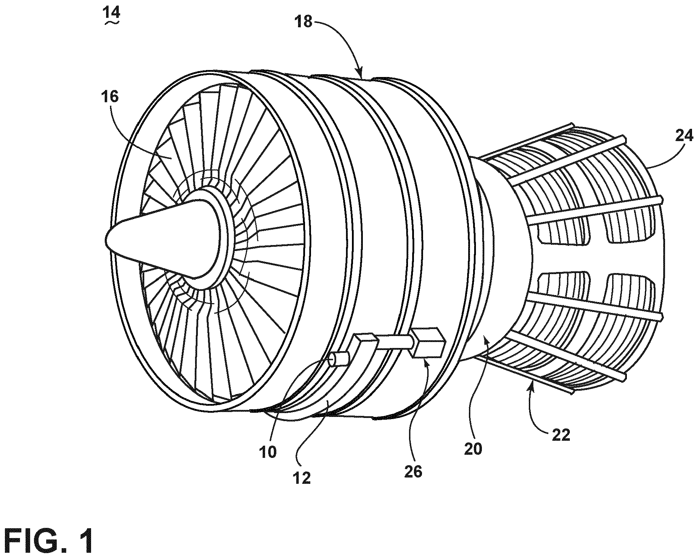

Referring to FIG. 1, an air turbine starter motor or ATS 10 is coupled to an accessory gear box (AGB) 12, also known as a transmission housing, and together are schematically illustrated as being mounted to a turbine engine 14 such as a gas turbine engine. This assembly is commonly referred to as an Integrated Starter/Generator Gearbox (ISGB). The turbine engine 14 comprises an air intake with a fan 16 that supplies air to a high pressure compression region 18. The air intake with a fan 16 and the high pressure compression region collectively are known as the 'cold section' of the turbine engine 14 upstream of the combustion. The high pressure compression region 18 provides a combustion chamber 20 with high pressure air. In the combustion chamber, the high pressure air is mixed with fuel and combusted. The hot and pressurized combusted gas passes through a high pressure turbine region 22 and a low pressure turbine region 24 before exhausting from the turbine engine 14. As the pressurized gases pass through the high pressure turbine region 22 and the low pressure turbine region 24, rotational energy is extracted from the flow of the gases passing through the turbine engine 14. A shaft can connect the high pressure turbine region 22 to the high pressure compression 18 region to power the compression mechanism. The low pressure turbine can be coupled to the fan 16 of the air intake by way of a shaft to power the fan 16.

The AGB 12 is coupled to the turbine engine 14 at either the high pressure or low pressure turbine region 22, 24 by way of a mechanical power take-off 26. The mechanical power take-off 26 contains multiple gears and means for mechanical coupling of the AGB 12 to the turbine engine 14. Under normal operating conditions, the power take-off 26 translates power from the turbine engine 14 to the AGB 12 to power accessories of the aircraft for example but not limited to fuel pumps, electrical systems, and cabin environment controls. The ATS 10 can be mounted on the outside of either the air intake region containing the fan 16 or on the core near the high-pressure compression region 18.

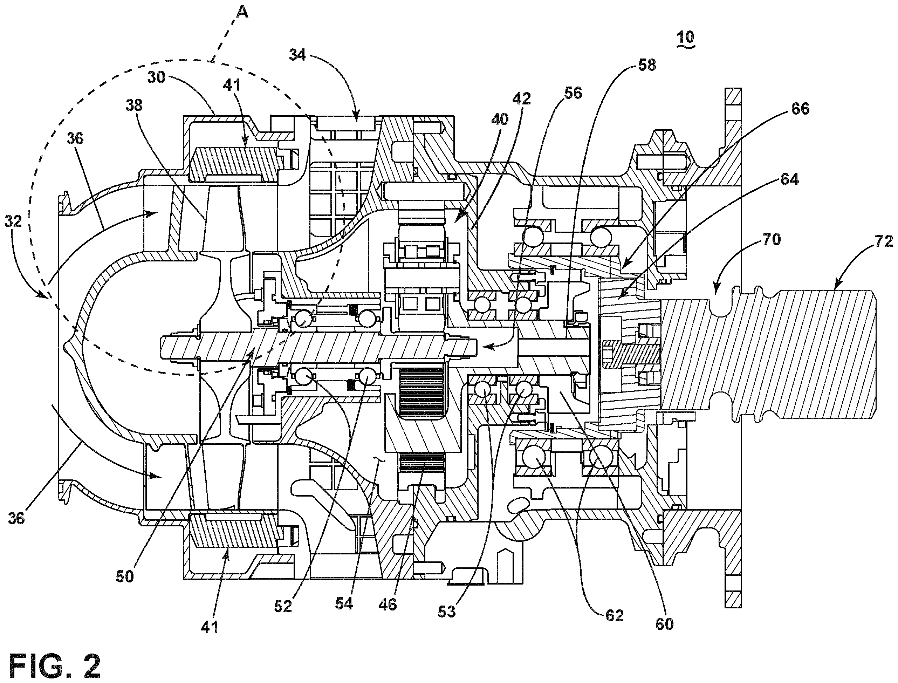

Referring now to FIG. 2, the ATS 10, which can be mounted to the AGB 12 is shown in greater detail. Generally, the ATS 10 includes a housing 30 defining an inlet 32, an outlet 34, and a flow path 36 extending between the inlet 32 and outlet 34 for communicating a flow of gas there through. In one non-limiting example, the gas is air and is supplied from either a ground-operating air cart, an auxiliary power unit, or a cross-bleed start from an engine already operating. The ATS 10 includes a turbine member 38 within the housing 30 and disposed within the flow path 36 for rotatably extracting mechanical power from the flow of gas along the flow path 36. A containment system 41 is disposed in the housing 30 surrounding the turbine member 38. A gear box 42 is mounted within the housing 30. Further, a gear train 40, disposed within the gear box 42 and drivingly coupled with the turbine member 38, can be caused to rotate.

The gear train 40 includes a ring gear 46 and can further comprise any gear assembly including for example but not limited to a planetary gear assembly or a pinion gear assembly. A turbine shaft 50 couples the gear train 40 to the turbine member 38 allowing for the transfer of mechanical power to the gear train 40. The turbine shaft 50 is coupled to the gear train 40 and rotatably supported by a pair of turbine bearings 52. The gear train 40 is supported by a pair of carrier bearings 53. A gear box interior 54 can contain a lubricant, including, but not limited to, a grease or oil to provide lubrication and cooling to mechanical parts contained therein such as the gear train 40, ring gear 46, and bearings 52, 53.

There is an aperture 56 in the gear box 42 through which the turbine shaft 50 extends and meshes with a carrier shaft 58 to which a clutch 60 is mounted and supported by a pair of spaced bearings 62. A drive shaft 64 extends from the gear box 42 and is coupled to the clutch 60 and additionally supported by the pair of spaced bearings 62. The drive shaft 64 is driven by the gear train 40 and coupled to the AGB 12, such that during a starting operation the drive shaft 64 provides a driving motion to the AGB 12.

The clutch 60 can be any type of shaft interface portion that forms a single rotatable shaft 66 comprising the turbine shaft 50, the carrier shaft 58, and the drive shaft 64. The shaft interface portion can be by any known method of coupling including, but not limited to, gears, splines, a clutch mechanism, or combinations thereof.

The ATS 10 can be formed by any materials and methods, including, but not limited to, die-casting of high strength and lightweight metals such as aluminum, stainless steel, iron, or titanium. The housing 30 and the gear box 42 can be formed with a thickness sufficient to provide adequate mechanical rigidity without adding unnecessary weight to the ATS 10 and, therefore, the aircraft.

The rotatable shaft 66 can be constructed by any materials and methods, including, but not limited to extrusion or machining of high strength metal alloys such as those containing aluminum, iron, nickel, chromium, titanium, tungsten, vanadium, or molybdenum. The diameter of the turbine shaft 50, carrier shaft 58, and drive shaft 64 can be fixed or vary along the length of the rotatable shaft 66. The diameter can vary to accommodate different sizes, as well as rotor to stator spacing.

As described herein, air supplied along the flow path 36 rotates the turbine member 38 for driving the rotation of the rotatable shaft 66. Therefore, during starting operations, the ATS 10 can be the driving mechanism for the turbine engine 14 via rotation of the rotatable shaft 66. The non-driving mechanism, that is, the equipment being driven by the driving mechanism, can be understood as rotating equipment utilizing the rotational movement of the rotatable shaft 66, for example to generate electricity in the ATS 10.

The drive shaft 64 is further coupled to a decoupler 70. The decoupler 70 includes an output shaft 72, the output shaft 72 is operably coupled to the engine 14 such that the output shaft can rotate a portion of the engine 14.

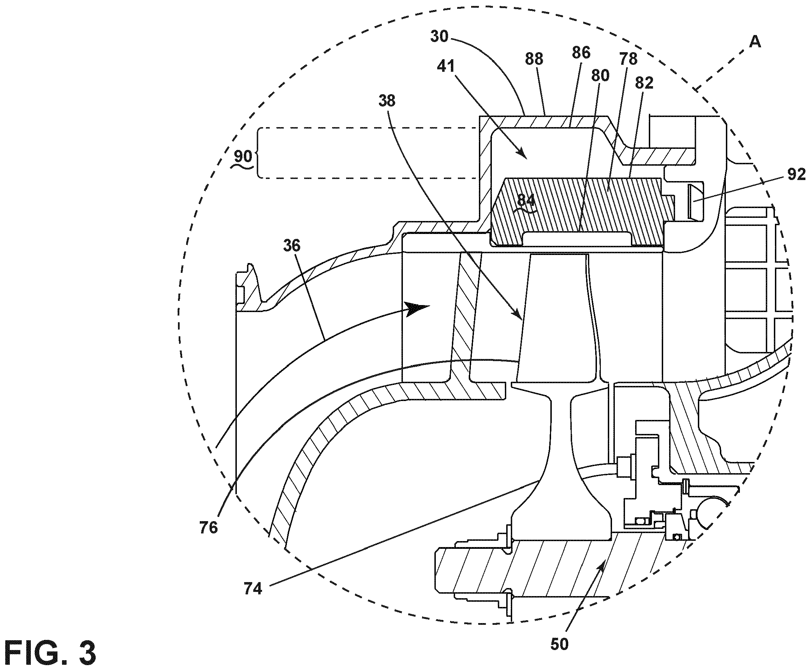

FIG. 3 is an enlarged view of portion A from FIG. 2 of the ATS 10 illustrating a portion of the containment system 41 and the turbine member 38. The turbine member 38 is a rotating assembly mounted about a rotational axis of the turbine shaft 50. By way of non-limiting example, the turbine member 38 comprises a turbine disc 74 having a plurality of radiating airfoils illustrated as turbine blades 76. The containment system 41 comprises a containment structure described herein as a containment band 78 having an inner band surface 80 and an outer band surface 82 defining a thickness 84 of the containment band 78. The containment band 78 as described herein can be any containment structure utilized to surround the turbine member 38 in part or in whole and be formed from a continuous band or parts formed separately and mounted to each other. The inner band surface 80 can have a geometry complementary to the turbine member 38 such that the turbine member 38 can rotate freely in the housing 30 without contacting the containment band 78.

The housing 30 has an interior surface 86 defining an interior of the housing 30 and an outer surface 88 exterior to the housing 30. The outer band surface 82 of the containment band 78 and the interior surface 86 of the housing 30 can define a radial gap 90 between the containment band 78 and the housing 30.

The radial gap 90 allows for free deformation of the containment band 78. Free deformation of the containment band 78 can dissipate a portion of the energy, reducing the eventual deformation of the housing 30, and potential energy transfer and damage to additional components of the housing 30.

During normal operation of the ATS 10, the containment band 78 is held in place in the housing 30 via one or more prestressed springs 92 inducing load on the containment band 78 against the housing 30. In the event components of the turbine disc 74 are free to move, the containment band 78 can become dislodged and rotate freely to dissipate some of the energy of any loose components and deform from its original shape around the loose components to absorb some of the energy from, and contain the loose components of the turbine disc 74, to prevent damage to adjacent parts of the ATS 10.

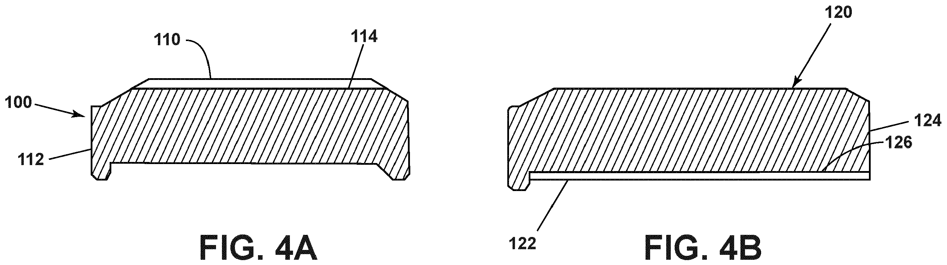

FIG. 4A is a schematic cross-sectional view of a containment band 100 reinforced with Shape Memory Alloy (SMA) according to an aspect of the disclosure herein. The containment band 100 can be the containment band 78 of FIG. 3 and can have any cross-sectional geometry suitable for a containment band. The containment band 100 includes an SMA layer 110 and a metal alloy layer 112. The SMA layer 110 extends circumferentially along at least a portion of an outer band surface 114 of the containment band 100. The SMA layer 110 can include a solid layer of SMA or a plurality of SMA rings.

SMA materials, such as Ni-Ti alloy, exhibit pseudo-elastic behavior allowing an article formed of SMA to return to its original shape after a deformation. In addition, SMAs have a high strain upon failure. Some SMA materials can have failure strains of 50-90% and twice the toughness of steel. Therefore, reinforcing a containment band by incorporating an SMA material can increase the energy absorbing capability of the containment system by allowing the containment band to deform to absorb energy while still maintaining enough structural integrity to contain any loose turbine rotor components. Further, the density of SMA is typically lower than steel. Therefore, replacing all or portions of the containment band 78 with SMA can decrease the overall weight of the containment band 78, and thus the entire aircraft.

By way of non-limiting example, the SMA described herein can comprise Nitinol which is an alloy having approximately 55% by weight nickel and 45% by weight titanium and annealed to form a part in the desired shape as is known in the art.

When loose components of the turbine member 38 separate from the turbine shaft 50, they can move in a radial direction. The reinforced containment band 100 will deform to absorb the impact of the loose components of the turbine member 38. The loose components of the turbine disc 74 can contact the containment band 100 with a high kinetic energy. The containment band 100 is held in place in the housing 30 during normal operation of an ATS, however, upon impact by the loose components of the turbine disc 74, the containment band 100 can rotate freely to dissipate some of the energy of the loose components and deform from its original shape around the components to absorb some of the energy from as well as contain the components of the turbine disc 74 to prevent damage to adjacent parts of the ATS 10.

Due to its elastic behavior, when attempting to regain its original shape, the SMA layer 110 exerts a compressive force on the metal alloy layer 112, however, the deformed metal alloy layer 112 prevents the SMA layer 110 from completely regaining its original shape resulting in an outstretched SMA layer 110. The outstretched SMA layer 110 continues exerting compressive forces on the metal alloy layer 112, thus supporting the structural integrity of the metal alloy layer 112, and in turn increasing the ability of the reinforced containment band 100 to absorb the energy exerted by any loose components of the turbine member 38. When the compressive forces of the SMA layer 110 balance the deformation forces of the metal alloy layer 112, resulting in the same or better energy absorption of the containment band 100 compared to a solid metal containment band, forming the reinforced containment band 100 may require less metal alloy than a traditional metal containment band resulting in an overall lighter weight containment band with equivalent or better energy absorbing capability.

FIG. 4B is a schematic cross-sectional view of a containment band 120 reinforced with SMA according to another aspect of the disclosure. The containment band 120 can be the containment band 78 of FIG. 3 and can have any cross-sectional geometry suitable for a containment band. The containment band 120 includes an SMA layer 122 and a metal alloy layer 124. The SMA layer 122 extends circumferentially along at least a portion of an inner band surface 126 of the containment band 120. The SMA layer 122 can comprise a solid layer of SMA or a plurality of SMA rings.

The reinforced containment band 120 can deform as it absorbs the impact of any loose components of the turbine member 38. The SMA layer 122 will attempt to regain its original shape at the same time the metal alloy layer 124 is deforming to absorb the energy of the impact of the loose components. The deformed metal alloy layer 124 prevents the SMA layer 122 from completely regaining its original shape resulting in an outstretched SMA layer 122. The outstretched SMA layer 122 continues exerting elastic forces on the metal alloy layer 124. Thus, the elastic forces of the SMA layer 122 that oppose the deformation forces of the metal alloy layer 124 will counteract to prevent and control the overall deformation of the containment band 120, and in turn increasing the energy absorbing ability of the reinforced containment band 120. When the elastic forces of the SMA layer 122 balance the deformation forces of the metal alloy layer 124, resulting in the same or better energy absorption of the containment band 120 compared to a solid metal containment band, less metal alloy may be required to form the containment band 120 resulting in a lighter weight containment band with equivalent or better energy absorbing capability as a traditional containment band.

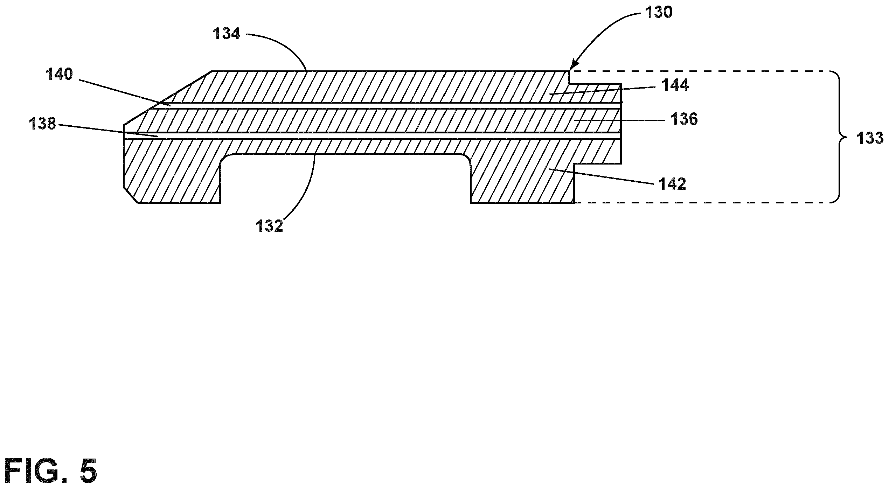

FIG. 5 is a schematic cross-sectional view of a containment band 130 reinforced with SMA according to yet another aspect of the disclosure herein. The containment band 130 can be the containment band 78 of FIG. 3 and can have any cross-sectional geometry suitable for a containment band. The reinforced containment band 130 comprises alternating layers of SMA and metal alloy between an inner band surface 132 and an outer band surface 134 defining a thickness 133 of the reinforced containment band 130. A first metal alloy layer 136 is sandwiched between a first SMA layer 138 and a second SMA layer 140. A second metal alloy layer 142 forms the inner band surface 132 while a third metal alloy layer 144 forms the outer band surface 134. The metal alloy can be the same or different in each of the metal alloy layers 136, 142, 144. The SMA material can be the same or different in each of the SMA layers 138, 140. Alternatively, the reinforced containment band 130 can comprise a single SMA layer or any number of SMA layers. Further, the percentage of SMA and the spacing between the layers of SMA and metal alloy can be determined or dependent upon requirements of the containment system.

Using SMA in place of metal alloy in portions of the thickness 133 of the containment band 130 decreases the overall weight of the containment band 130, and thus the aircraft. Further, sandwiching the SMA between the layers of metal alloy can increase the efficiency of energy absorption in the containment band 130 as already described herein.

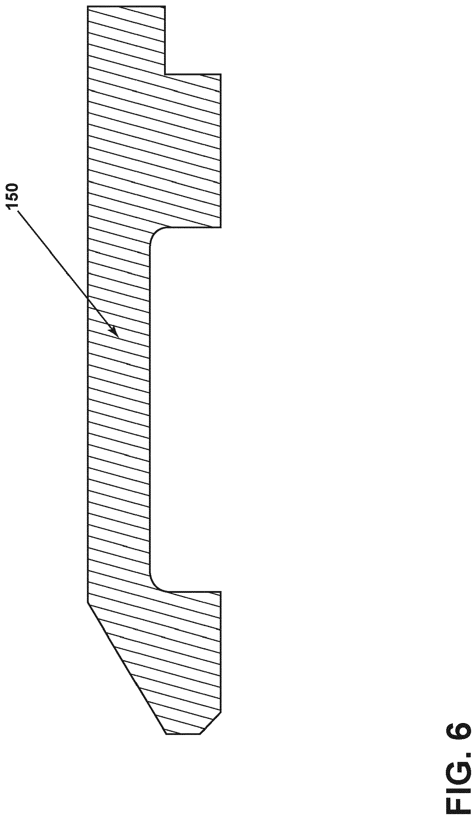

FIG. 6 is a schematic cross-sectional view of a containment band 150 according to yet another aspect of the disclosure herein, which does not correspond to the claims and is not a part of the invention. Again, containment band 150 can be the containment band 78 of FIG. 3 and can have any cross-sectional geometry suitable for a containment band. A containment band 150 is formed entirely of SMA. Due to SMA's pseudo-elastic behavior, the containment band 150 formed completely of SMA can have a larger deformation compared to a traditional containment band during or the other containment bands 100, 120, and 130 described herein. Therefore, the containment band 150 will also require a sufficient radial gap 90 to accommodate the larger deformation. However, because of SMA's high strain to failure, toughness, lower density, as well as pseudo-elastic behavior, forming the containment band 150 entirely of SMA can also require less overall material to absorb an equivalent amount of energy when compared to a traditional containment band formed entirely of metal alloy. Less material required to form the containment band 150 along with lower density of the containment band 150 when compared with traditional metal alloy containment bands can provide a decreased overall thickness of the containment band 150 as well as a decreased overall weight of the containment band 150, while maintaining the energy absorbing requirements of the containment system 41.

While illustrated as a ring structure, it should be understood that the containment bands as described herein can be a containment structure formed in parts or as a whole singular piece. It is contemplated that parts of, or the entire containment structure is additively manufactured. An additive manufacturing (AM) process is where a component is built layer-by-layer by successive deposition of material. AM is an appropriate name to describe the technologies that build 3D objects by adding layer-upon-layer of material, whether the material is plastic or metal. AM technologies can utilize a computer, 3D modeling software (Computer Aided Design or CAD), machine equipment, and layering material. Once a CAD sketch is produced, the AM equipment can read in data from the CAD file and lay down or add successive layers of liquid, powder, sheet material or other material, in a layer-upon-layer fashion to fabricate a 3D object. It should be understood that the term "additive manufacturing" encompasses many technologies including subsets like 3D Printing, Rapid Prototyping (RP), Direct Digital Manufacturing (DDM), layered manufacturing and additive fabrication. Non-limiting examples of additive manufacturing that can be utilized to form an additively-manufactured component include powder bed fusion, vat photopolymerization, binder jetting, material extrusion, directed energy deposition, material jetting, or sheet lamination.

Benefits associated with the containment band described herein include utilizing lighter weight materials with increased toughness to reinforce or replace the metal containment band can increase the energy absorbing capabilities of the containment band while reducing the weight of the containment band, and thus the aircraft. This increases the efficiency of the aircraft, and protects the remaining parts of the ATS. Protecting the remaining parts of the ATS during a starter failure decreases costs associated with parts and maintenance required to repair the ATS.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new examples, whether or not the new examples are expressly described. Combinations or permutations of features described herein are covered by this disclosure. Many other possible embodiments and configurations in addition to that shown in the above figures are contemplated by the present disclosure. Additionally, the design and placement of the various components such as starter, AGB, or components thereof can be rearranged such that a number of different in-line configurations could be realized.

This written description uses examples to disclose aspects of the invention, including the best mode, and also to enable any person skilled in the art to practice aspects of the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims.

## Claims

1. An air turbine starter (10) for starting an engine (14), comprising:
a housing (30) having an interior surface (86) defining an interior;
at least one turbine member (38) rotatably mounted within the interior about a rotational axis, and having a plurality of circumferentially spaced blades (76); and
a containment structure (78, 100, 120, 130) having a radially outer surface (82, 114, 134) spaced from the interior surface (86) to define a radial gap (90) between the housing (30) and the containment structure (78, 100, 120, 130) and a radially inner surface (80, 126, 132) with a thickness that extends between the radially outer surface (82, 114, 134) and the radially inner surface (80, 126, 132), the containment structure (78, 100, 120, 130) circumferentially surrounding at least a portion of the at least one turbine member (38); **characterised in that** the containment structure (78, 100, 120, 130) comprises at least one layer of a shape memory alloy (SMA) and further comprises at least one layer of metal alloy (112, 124, 136, 142, 144).

2. The air turbine starter (10) of claim 1, wherein the shape memory alloy (SMA) extends circumferentially along at least a portion of the containment structure (78, 100, 120, 130).

3. The air turbine starter (10) of any of claims 1-2, wherein the shape memory alloy (SMA) extends along the radially outer surface (82, 114, 134).

4. The air turbine starter (10) any of claims 1-3, wherein the shape memory alloy (SMA) extends along the radially inner surface (80, 126, 132).

5. The air turbine starter (10) of any of claims 1-4, wherein the containment structure (78, 100, 120, 130) is freely deformable in the radial gap.

6. The air turbine starter (10) of any of claims 1-5, wherein the shape memory alloy (SMA) is at least two layers of shape memory alloy (SMA).

7. The air turbine starter (10) of claim 1, wherein there are at least two layers of shape memory alloy (SMA) and wherein the at least one layer of metal alloy (112, 124, 136, 142, 144) is disposed between the at least two layers of shape memory alloy (SMA).

8. The air turbine starter (10) of any of claims 1-7, further comprising alternating layers of metal alloy (112, 124, 136, 142, 144) and shape memory alloy (SMA).

9. The air turbine starter (10) of any of claims 1-8, wherein the shape memory alloy (SMA) is a nickel-titanium alloy.

10. A method of forming a containment structure (78, 100, 120, 130) for an air turbine starter (10), the method comprising forming the containment structure (78, 100, 120, 130) to define a thickness extending between a radially outer surface (82, 114, 134) and a radially inner surface (80, 126, 132), **characterised in that** the containment structure comprises at least one layer of a shape memory alloy (SMA). defining at least a portion of the thickness, and further comprises at least one layer of metal alloy (112, 124, 136, 142, 144).

11. The method of claim 10, further comprising forming the shape memory alloy (SMA) circumferentially along at least a portion of the containment structure (78, 100, 120, 130).

12. The method of any of claims 10-11, further comprising forming the shape memory alloy (SMA) along the radially outer surface (82, 114, 134).

13. The method of any of claims 10-12, further comprising forming the shape memory alloy (SMA) along the radially inner surface (80, 126, 132)

## Patentansprüche

1. Luftturbinenstarter (10) zum Starten einer Maschine (14), umfassend:
ein Gehäuse (30), das eine Innenoberfläche (86) aufweist, die einen Innenraum definiert;
mindestens ein Turbinenelement (38), das drehbar innerhalb des Innenraums um eine Drehachse montiert ist und eine Vielzahl von in Umfangsrichtung beabstandeten Schaufeln (76) aufweist; und
eine Aufnahmestruktur (78, 100, 120, 130), die eine radial äußere Oberfläche (82, 114, 134), die von der Innenoberfläche (86) beabstandet ist, um einen radialen Spalt (90) zwischen dem Gehäuse (30) und der Aufnahmestruktur (78, 100, 120, 130) zu definieren, und eine radial innere Oberfläche (80, 126, 132) mit einer Dicke, die sich zwischen der radial äußeren Oberfläche (82, 114, 134) und der radial inneren Oberfläche (80, 126, 132) erstreckt, aufweist, wobei die Aufnahmestruktur (78, 100, 120, 130) mindestens einen Abschnitt des mindestens einen Turbinenelements (38) in Umfangsrichtung umgibt; **dadurch gekennzeichnet, dass** die Aufnahmestruktur (78, 100, 120, 130) mindestens eine Schicht einer Formgedächtnislegierung (SMA) umfasst und ferner mindestens eine Schicht aus Metalllegierung (112, 124, 136, 142, 144) umfasst.

2. Luftturbinenstarter (10) nach Anspruch 1, wobei sich die Formgedächtnislegierung (SMA) in Umfangsrichtung entlang mindestens eines Abschnitts der Aufnahmestruktur (78, 100, 120, 130) erstreckt.

3. Luftturbinenstarter (10) nach einem der Ansprüche 1-2, wobei sich die Formgedächtnislegierung (SMA) entlang der radial äußeren Oberfläche (82, 114, 134) erstreckt.

4. Luftturbinenstarter (10) nach einem der Ansprüche 1-3, wobei sich die Formgedächtnislegierung (SMA) entlang der radial inneren Oberfläche (80, 126, 132) erstreckt.

5. Luftturbinenstarter (10) nach einem der Ansprüche 1-4, wobei die Aufnahmestruktur (78, 100, 120, 130) im Radialspalt frei verformbar ist.

6. Luftturbinenstarter (10) nach einem der Ansprüche 1-5, wobei die Formgedächtnislegierung (SMA) mindestens zwei Schichten von Formgedächtnislegierung (SMA) ist.

7. Luftturbinenstarter (10) nach Anspruch 1, wobei mindestens zwei Schichten aus Formgedächtnislegierung (SMA) vorhanden sind und wobei die mindestens eine Schicht aus Metalllegierung (112, 124, 136, 142, 144) zwischen den mindestens zwei Schichten aus Formgedächtnislegierung (SMA) angeordnet ist.

8. Luftturbinenstarter (10) nach einem der Ansprüche 1-7, ferner umfassend abwechselnde Schichten aus Metalllegierung (112, 124, 136, 142, 144) und Formgedächtnislegierung (SMA).

9. Luftturbinenstarter (10) nach einem der Ansprüche 1-8, wobei die Formgedächtnislegierung (SMA) eine Nickel-Titan-Legierung ist.

10. Verfahren zum Bilden einer Aufnahmestruktur (78, 100, 120, 130) für einen Luftturbinenstarter (10), wobei das Verfahren das Bilden der Aufnahmestruktur (78, 100, 120, 130) umfasst, um eine Dicke zu definieren, die sich zwischen einer radial äußeren Oberfläche (82, 114, 134) und einer radial inneren Oberfläche (80, 126, 132) erstreckt, **dadurch gekennzeichnet, dass** die Aufnahmestruktur mindestens eine Schicht einer Formgedächtnislegierung (SMA) umfasst, die mindestens einen Abschnitt der Dicke definiert, und ferner mindestens eine Schicht aus Metalllegierung (112, 124, 136, 142, 144) umfasst.

11. Verfahren nach Anspruch 10, ferner umfassend das Bilden der Formgedächtnislegierung (SMA) in Umfangsrichtung entlang mindestens eines Abschnitts der Aufnahmestruktur (78, 100, 120, 130).

12. Verfahren nach einem der Ansprüche 10-11, ferner umfassend das Bilden der Formgedächtnislegierung (SMA) entlang der radial äußeren Oberfläche (82, 114, 134).

13. Verfahren nach einem der Ansprüche 10-12, ferner umfassend das Bilden der Formgedächtnislegierung (SMA) entlang der radial inneren Oberfläche (80, 126, 132)

## Revendications

1. Démarreur de turbine à air (10) permettant de démarrer un moteur (14), comprenant :
un boîtier (30) ayant une surface intérieure (86) définissant un intérieur ;
au moins un élément de turbine (38) monté de manière rotative à l'intérieur autour d'un axe de rotation, et ayant une pluralité de pales (76) espacées circonférentiellement ; et
une structure de confinement (78, 100, 120, 130) ayant une surface radialement externe (82, 114, 134) espacée de la surface intérieure (86) pour définir un espace radial (90) entre le boîtier (30) et la structure de confinement (78, 100, 120, 130) et une surface radialement interne (80, 126, 132) avec une épaisseur qui s'étend entre la surface radialement externe (82, 114, 134) et la surface radialement interne (80, 126, 132), la structure de confinement (78, 100, 120, 130) entourant circonférentiellement au moins une partie de l'au moins un élément de turbine (38) ;
**caractérisé en ce que** la structure de confinement (78, 100, 120, 130) comprend au moins une couche d'un alliage à mémoire de forme (AMF) et comprend en outre au moins une couche d'alliage métallique (112, 124, 136, 142, 144).

2. Démarreur de turbine à air (10) selon la revendication 1, dans lequel l'alliage à mémoire de forme (AMF) s'étend circonférentiellement le long d'au moins une partie de la structure de confinement (78, 100, 120, 130).

3. Démarreur de turbine à air (10) selon l'une quelconque des revendications 1 à 2, dans lequel l'alliage à mémoire de forme (AMF) s'étend le long de la surface radialement externe (82, 114, 134).

4. Démarreur de turbine à air (10) selon l'une quelconque des revendications 1 à 3, dans lequel l'alliage à mémoire de forme (AMF) s'étend le long de la surface radialement interne (80, 126, 132).

5. Démarreur de turbine à air (10) selon l'une quelconque des revendications 1 à 4, dans lequel la structure de confinement (78, 100, 120, 130) est librement déformable dans l'espace radial.

6. Démarreur de turbine à air (10) selon l'une quelconque des revendications 1 à 5, dans lequel l'alliage à mémoire de forme (AMF) est au moins deux couches d'alliage à mémoire de forme (AMF).

7. Démarreur de turbine à air (10) selon la revendication 1, dans lequel il y a au moins deux couches d'alliage à mémoire de forme (AMF) et dans lequel l'au moins une couche d'alliage métallique (112, 124, 136, 142, 144) est disposée entre les au moins deux couches d'alliage à mémoire de forme (AMF).

8. Démarreur de turbine à air (10) selon l'une quelconque des revendications 1 à 7, comprenant en outre des couches alternées d'alliage métallique (112, 124, 136, 142, 144) et d'alliage à mémoire de forme (AMF).

9. Démarreur de turbine à air (10) selon l'une quelconque des revendications 1 à 8, dans lequel l'alliage à mémoire de forme (AMF) est un alliage nickel-titane.

10. Procédé de formation d'une structure de confinement (78, 100, 120, 130) pour un démarreur de turbine à air (10), le procédé comprenant la formation de la structure de confinement (78, 100, 120, 130) pour définir une épaisseur s'étendant entre une surface radialement externe (82, 114, 134) et une surface radialement interne (80, 126, 132), **caractérisé en ce que** la structure de confinement comprend au moins une couche d'un alliage à mémoire de forme (AMF) définissant au moins une partie de l'épaisseur, et comprend en outre au moins une couche d'alliage métallique (112, 124, 136, 142, 144).

11. Procédé selon la revendication 10, comprenant en outre la formation de l'alliage à mémoire de forme (AMF) circonférentiellement le long d'au moins une partie de la structure de confinement (78, 100, 120, 130).

12. Procédé selon l'une quelconque des revendications 10 à 11, comprenant en outre la formation de l'alliage à mémoire de forme (AMF) le long de la surface radialement externe (82, 114, 134).

13. Procédé selon l'une quelconque des revendications 10 à 12, comprenant en outre la formation de l'alliage à mémoire de forme (AMF) le long de la surface radialement interne (80, 126, 132)
